# FASCICULE DE BREVET EUROPEEN

(11) **EP 0 561 665 B1**
(45) Date de publication et mention de la délivrance du brevet: **22.05.1996**
(21) Numéro de dépôt: 93400555.4
(22) Date de dépôt: 03.03.1993
(51) Int. Cl.: F16D 3/06, F16D 3/20

(54) **Joint de transmission articulé du type coulissant**
Schiebegelenkverbindung
Sliding type universal joint

(30) Priorité: 18.03.1992 FR 9203250
(43) Date de publication de la demande: 22.09.1993
(73) Titulaire: GKN AUTOMOTIVE AKTIENGESELLSCHAFT, D-53721 Siegburg (DE)
(72) Inventeur: Van Dest, Jean-Claude, F-91250 Saintry sur Seine (FR)
(74) Mandataire: Polus, Camille

(56) Documents cités:
- EP-A- 0 206 886
- EP-A- 0 462 869
- FR-A- 2 605 071
- GB-A- 861 088
- GB-A- 2 099 551
- US-A- 2 555 921
- US-A- 4 840 600
- PATENT ABSTRACTS OF JAPAN vol. 8, no. 177 (M-317)(1614) 15 Août 1984, &JP-A-59 069 527 (HITACHI)

## Description

La présente invention concerne un joint de transmission articulé coulissant, notamment pour véhicule automobile, du type décrit dans le préambule de la revendication 1.

Le document FR-A-2.506.872 décrit (Figures 8 et 9) un joint homocinétique de ce type.

Une telle conception d'un joint de transmission télescopique est particulièrement avantageuse dans la mesure où elle permet de filtrer les vibrations provenant de l'organe moteur et dans la mesure où le joint est pratiquement dépourvu de frottements internes périodiques.

On a proposé différents modes de mise en oeuvre du principe de conception d'un tel joint tel que par exemple ceux décrits et représentés dans le document FR-A-2.583.476.

On constate toutefois que le corps du joint de transmission est difficile à réaliser de manière économique dans la mesure où il est nécessaire de former dans le corps de joint de transmission des paires de chemins de roulement plans et parallèles pour les aiguilles de roulement ainsi que des faces ou des rainures de guidage et de maintien des cages d'aiguilles. Il est également nécessaire de réaliser des bras de tripode sphériques.

L'invention a pour but de proposer un joint de transmission mettant en oeuvre le principe de conception mentionné précédemment dont le corps de joint de transmission soit particulièrement simple à réaliser.

L'invention a également pour but de permettre une standardisation dans la fabrication des corps de joint de transmission du type homocinétique de manière qu'un même corps de joint comportant des chemins de portée se présentant sous la forme de gorges axiales à section transversale de profil circulaire, puisse être utilisé avec un tripode dont les éléments d'articulation comportent des cages d'aiguilles de roulement comme cela a été évoqué précédemment, ou avec un tripode dont les éléments d'articulation sont des galets sphériques montés tourillonnants sur les bras du tripode.

Dans ce but, la présente invention propose un joint de transmission articulé coulissant du type précité, caractérisé par la partie caractérisante de la revendication 1.

D'autres caractéristiques de l'invention sont décrites dans les revendications 2 à 6.

D'autres caractéristiques et avantages de l'invention apparaîtront à la lecture de la description qui va suivre pour la compréhension de laquelle on se reportera au dessin annexé dans lequel :
- La figure 1 est une vue en coupe transversale par un plan contenant les axes des bras du tripode d'un joint de transmission homocinétique coulissant réalisé conformément aux enseignements de l'invention ;
- la figure 2 est une vue en section selon la ligne 2-2 de la figure 1 ;
- la figure 3 est une vue en section selon la ligne 3-3 de la figure 2 ; et
- la figure 4 est une vue à plus grande échelle d'un détail de la figure 1.

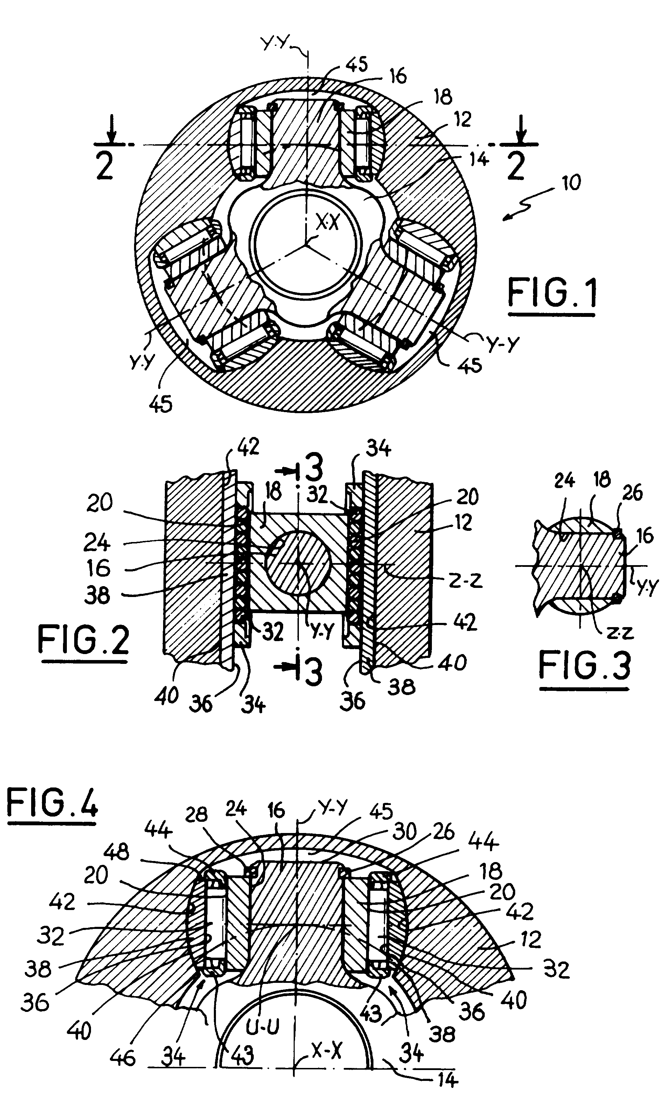

Le joint de transmission 10 illustré à la figure 1 comporte un corps de joint de transmission 12, également appelé barillet qui peut par exemple être relié à un organe menant d'une transmission de véhicule automobile.

Le joint de transmission 10 comporte également un tripode 14 comportant trois bras radiaux 16 régulièrement répartis à 120° autour de son axe de rotation X-X.

Le tripode 14 peut par exemple être relié à un organe mené de la transmission du véhicule.

Chacun des bras 16 est réalisé sous la forme d'un tourillon cylindrique dont l'axe Y-Y est concourant et perpendiculaire à l'axe de rotation X-X du tripode 14.

Chaque tourillon 16 reçoit à rotation un élément intermédiaire d'articulation 18.

Dans le mode de réalisation illustré aux figures, l'élément intermédiaire 18 est un tronçon d'un cylindre d'axe Z-Z.

Le tronçon est délimité axialement par deux faces 20 d'extrémité planes opposées qui sont perpendiculaires à l'axe Z-Z.

Le cylindre 18 est percé en son milieu par un trou 24 dont l'axe est perpendiculaire et concourant à l'axe Z-Z et dont le diamètre correspond sensiblement au diamètre extérieur du tourillon cylindrique 16 de manière que l'élément d'articulation 18 soit monté tournant sur le tourillon 16 autour de l'axe Y-Y.

L'élément d'articulation 18 est immobilisé axialement sur le tourillon 16 au moyen d'un anneau élastique 26 qui est monté dans une gorge radiale 28 formée au voisinage de la face d'extrémité libre 30 du tourillon 16.

Chacune des deux faces planes 20 coopère avec une file d'aiguilles 32.

Chaque file d'aiguilles de roulement 32 est maintenue dans une cage 34.

Les aiguilles de roulement 32 de chaque file coopèrent également avec une portion de surface plane 36 formée sur une piste 38.

Chaque piste 38 est réalisée sous la forme d'une pièce ou barrette et elle comporte également une portion de surface cylindrique convexe 40 dont l'axe est parallèle au plan de la portion de surface plane 36.

Chaque cage d'aiguilles 34 comporte deux flancs longitudinaux parallèles et opposés 43 et 44 qui coopèrent respectivement avec les flancs parallèles et opposés 46 et 48 de la piste 38 associée à la cage 34.

Les flancs 46 et 48 sont perpendiculaires au plan de la portion de surface plane 36 et chaque cage d'aiguilles 34 est ainsi maintenue dans la direction radiale par rapport à la piste 38 et guidée longitudinalement selon une direction parallèle au plan de la surface plane 36 et à l'axe de la portion de surface cylindrique convexe 40.

La portion de surface cylindrique convexe 40 de chaque piste ou barrette 38 coopère avec une portion de surface cylindrique concave complémentaire 42 formée dans le corps de joint de transmission 12.

Le corps de joint de transmission 12 comporte à cet effet trois gorges axiales 45 dont le profil, en section transversale, est partiellement circulaire de manière à constituer, pour chaque gorge 45, les deux portions de surfaces cylindriques concaves en vis-à-vis 42.

Le corps de joint de transmission 12 présente ainsi une forme connue qui permet également le montage d'un tripode de joint homocinétique coulissant (non représenté) dont chaque tourillon est équipé d'un galet de roulement de profil sphérique dont la surface externe coopère directement avec les portions de surfaces cylindriques concaves 42.

La conception du corps de joint 12 est donc particulièrement simple et sa fabrication, par exemple par forgeage et calibrage peut être réalisée industriellement de manière très économique.

Selon une caractéristique qui n'est pas illustrée sur les figures, les pistes ou barrettes 38 sont immobilisées axialement par rapport au corps de joint de transmission 12 et elles ne peuvent se déplacer par rapport à ce dernier qu'en pivotement autour d'un axe qui correspond sensiblement à l'axe U-U commun aux portions de surfaces cylindriques concaves 42.

L'invention n'est pas limitée au mode de réalisation qui vient d'être décrit.

Il est par exemple possible de réaliser les deux pistes ou barrettes 38 sous la forme d'un élément unique en reliant entre elles les deux barrettes 38 par une portion transversale de manière à constituer une pièce en forme de U.

Le guidage et le maintien des cages d'aiguilles 34 peut être réalisé par tout moyen équivalent aux flancs 43 et 44 et, par exemple au moyen d'un seul flanc qui serait reçu dans une rainure longitudinale de maintien et de guidage formée dans la portion de surface plane 36 de la barrette 38 associée à la cage d'aiguilles.

La forme de l'élémeiit intermédiaire 18 n'est pas limitée à un tronçon de cylindre.

Comme les barrettes 38, les deux cages à aiguilles peuvent être réalisées sous forme d'un élément unique.

Le corps de Joint de transmission peut également être réalisé en un matériau composite synthétique conformément aux enseignements du document FR-A-2.663.699.

## Revendications

1. Joint de transmission articulé (10) coulissant, du type comprenant un corps de joint de transmission (12) et un tripode (14) comportant trois bras radiaux (16) répartis régulièrement autour de l'axe de rotation (X-X) du tripode et dont chacun (16) est susceptible de coulisser entre deux portions de surfaces (36) planes et parallèles du corps de joint (12) par l'intermédiaire d'un élément d'articulation (18) qui est porté par le bras (16) du tripode (14) et qui comporte deux faces planes parallèles et opposées (20) dont chacune coopère avec une desdites portions de surfaces planes (36) avec interposition d'une file d'aiguilles de roulement (32) maintenues dans une cage (34), chaque bras (16) du tripode comportant un tourillon sur lequel l'élément intermédiaire d'articulation (18) est monté et le corps de joint (12) comportant trois chemins de portée, caractérisé en ce que chaque chemin comporte deux pistes (38) dont chacune est constituée par une pièce comportant une portion de surface plane (36) qui coopère avec les aiguilles de roulement (32) d'une des files d'aiguilles et comportant une portion de surface cylindrique convexe (40) dont l'axe est parallèle à ladite portion de surface plane (36) et qui coopère avec une surface de portée cylindrique concave complémentaire (42) formée dans le corps de joint (12), par rapport à laquelle elle est susceptible de pivoter, et en ce que chaque tourillon (16) du tripode est cylindrique d'axe (Y-Y) parallèle auxdites surfaces planes opposées (20) et concourant et perpendiculaire à l'axe de rotation (X-X) du tripode (14), l'élément intermédiaire d'articulation (18) étant monté tournant sur le tourillon autour de cet axe (Y-Y).

2. Joint de transmission selon la revendication 1, caractérisé en ce que chaque élément intermédiaire d'articulation (18) est immobilisé axialement par rapport au tourillon associé (16).

3. Joint de transmission selon l'une des revendications 1 ou 2, caractérisé en ce que chaque piste (38) est immobilisée axialement par rapport au corps de joint (12).

4. Joint de transmission selon l'une quelconque des revendications précédentes, caractérisé en ce que chaque élément intermédiaire d'articulation (18) est un tronçon de cylindre dont les faces d'extrémité (20) sont perpendiculaires à l'axe (Z-Z) du cylindre et qui est percé en son milieu d'un trou (24) dont l'axe est concourant et perpendiculaire à l'axe (Z-Z) du cylindre (18) et qui reçoit le tourillon (16).

5. Joint de transmission selon l'une quelconque des revendications précédentes, caractérisé en ce que chacune des cages (34) d'aiguilles (32) comporte au moins un flanc longitudinal de guidage et de maintien (43, 44) qui s'étend selon une direction perpendiculaire aux axes de rotation des aiguilles (32) et qui coopère avec au moins une surface de guidage complémentaire (46, 48) de la piste associée (38).

6. Joint de transmission selon la revendication 5, caractérisé en ce que chaque cage (32) comporte deux flancs parallèles (43, 44) de guidage et de maintien entre lesquels sont reçus deux flancs parallèles et opposées (46, 48) de la piste associée (38).

## Patentansprüche

1. Schiebegelenkverbindung (10) von der Art, welche einen Körper eines Antriebsgelenkes (12) und einen Dreibeinmast (14) mit drei radialen Armen (16) aufweist, welche in gleichmäßigem Abstand um die Rotationsachse (X-X) des Dreibeinmastes verteilt sind und von denen 'jeder Arm (16) zwischen zwei ebenen und parallel zum Gelenkkörper verlaufenden Teilabschnitten der Oberflächen (36) mit Hilfe eines Zwischengelenkes (18) gleiten kann, welches von dem Arm (16) des Dreibeinmastes getragen wird und zwei flache parallele und entgegengesetzte Flächen (20) aufweist, die jeweils mit den Teilabschnitten der ebenen Oberflächen (36) zusammenwirken, zwischen denen eine Reihe von Nadeln eines in einem Lagerkäfig (34) aufgenommenen Nadellagers (32) angeordnet ist, wobei jeder der Arme (16) des Dreibeinmastes einen Lagerzapfen aufweist, auf dem das Zwischengelenk (18) montiert ist und der Körper dieses Antriebsgelenkes (12) drei Auflageflächen aufweist,
**dadurch gekennzeichnet, daß**
jede der Auflageflächen zwei Laufflächen (38) aufweist, welche jeweils durch einen Teilabschnitt der ebenen Oberfläche (36) gebildet werden, welche mit den Nadeln (32) des Nagellagers einer der Reihen von Nadeln zusammenwirken und einen konvexen Teilabschnitt einer zylindrischen Oberfläche (40) aufweisen, dessen Achse parallel zu diesem Teilabschnitt der ebenen Oberfläche verläuft und mit einer komplementären zylindrischen konkaven Auflagefläche (42) zusammenwirkt, welche in dem Körper des Antriebsgelenkes (12) ausgebildet ist und gegenüber welchem sie gekippt werden kann, und dadurch, daß jeder einzelne Lagerzapfen (16) des Dreibeinmastes eine zylindrische Achse (Y-Y) aufweist, welche parallel zu diesen entgegengesetzten ebenen Flächen (20) sowie kreuzend und senkrecht zu der Rotationsachse (X-X) des Dreibeinmastes (14) verläuft, und daß das Zwischengelenk (18) auf dem Lagerzapfen drehbar um diese Achse (Y-Y) gelagert ist.

2. Schiebegelenkverbindung nach Anspruch 1,
**dadurch gekennzeichnet, daß**
jedes der Zwischengelenke (18) axial gegenüber dem zugeordneten Lagerzapfen (16) festgelegt ist.

3. Schiebegelenkverbindung nach einem der Ansprüche 1 oder 2,
**dadurch gekennzeichnet, daß**
jede der Laufflächen (38) axial gegenüber dem Körper des Antriebsgelenkes (12) festgelegt ist.

4. Schiebegelenkverbindung nach einem der vorausgegangenen Ansprüche,
**dadurch gekennzeichnet, daß**
jedes der Zwischengelenke (18) einen zylindrischen Teilabschnitt bildet, dessen Endflächen (20) senkrecht zur Achse (Z-Z) des Zylinders verlaufen, und dessen Mittelteil mit einer Bohrung (24) versehen ist, deren Achse kreuzend und senkrecht zur Achse (Z-Z) des Zylinders (18) angeordnet ist und den Lagerzapfen (16) aufnimmt.

5. Schiebegelenkverbindung nach einem der vorausgegangenen Ansprüche,
**dadurch gekennzeichnet, daß**
jeder der Lagerkäfige (34) der Nadellager (32) mindestens eine längliche Flanke für die Führung und Halterung (43, 44) aufweist, welche sich senkrecht zu den Rotationsachsen des Nadellagers (32) erstreckt und mit mindestens einer der komplementären Führungsflächen (46, 48) der zugeordneten Laufflächen (38) zusammenwirkt.

6. Schiebegelenkverbindung nach Anspruch 5,
**dadurch gekennzeichnet, daß**
jeder der Lagerkäfige (32) zwei parallele Führungs- und Halterungsflanken (43, 44) aufweist, zwischen denen zwei parallele und entgegengesetzte Flanken (46, 48) der zugeordneten Lauffläche (38) aufgenommen sind.

## Claims

1. Sliding type universal joint (10) of the type comprising a joint body (12) and a tripod (14) having three radial arms (16) uniformly distributed about the rotation axis (X-X) of the tripod, each of which (16) is capable of sliding between two planar surface portions (36) parallel to the joint body (12) via an articulating member (18) which is carried by the arm (16) of the tripod (14) and which has two opposing, parallel, planar surfaces (20) each of which cooperates with one of said planar surface portions (36) via an interposed line of needle bearings (32) held in a cage (34), each arm (16) of the tripod comprising a journal on which the intermediate articulating member (18) is mounted and the joint body (12) comprising three bearing surfaces, characterised in that each bearing surface comprises two tracks (38) each of which consists of a part comprising a planar surface portion (36) which cooperates with the needle bearings (32) of one of the lines of needles and comprising a convex cylindrical surface portion (40) the axis of which is parallel to said planar surface portion (36) and which cooperates with a complementary cylindrical bearing surface (42) formed in the joint body (12), relative to which it is capable of pivoting, and in that each journal (16) of the tripod is cylindrical with its axis (Y-Y) parallel to said opposing planar surfaces (20) and convergent with and perpendicular to the rotation axis (X-X) of the tripod (14), the intermediate articulating member (18) being rotatably mounted on the journal about this axis (Y-Y).

2. Universal joint according to claim 1, characterised in that each intermediate articulating member (18) is axially immobilised relative to the associated journal (16).

3. Universal joint according to claim 1 or 2, characterised in that each track (38) is axially immobilised relative to the joint body (12).

4. Universal joint according to any one of the preceding claims, characterised in that each intermediate articulating member (18) is a length of cylinder the end faces (20) of which are perpendicular to the axis (Z-Z) of the cylinder and which is drilled in its centre with a hole (24) the axis of which is convergent with and perpendicular to the axis (Z-Z) of the cylinder (18) and which receives the journal (16).

5. Universal joint according to any one of the preceding claims, characterised in that each of the cages (34) of needles (32) has at least one longitudinal guiding and retaining flank (43, 44) which extends in a direction perpendicular to the rotation axis of the needles (32) and which cooperates with at least one complementary guide surface (46, 48) of the associated track (38).

6. Universal joint according to claim 5, characterised in that each cage (32) comprises two parallel guiding and retaining flanks (43, 44) between which are accommodated two parallel and opposing flanks (46, 48) of the associated track (38).
